# EUROPEAN PATENT SPECIFICATION

(11) **EP 0 667 617 B1**
(45) Date of publication and mention of the grant of the patent: **10.06.1998**
(21) Application number: 95101602.1
(22) Date of filing: 07.02.1995
(51) Int. Cl.: G11B 23/087, G11B 15/60

(54) **Belt driver tape cartridge**
Bandkassette mit Riemenantrieb
Cassette de bande à entrainement par courroie

(30) Priority: 09.02.1994 US 193709
(43) Date of publication of application: 16.08.1995
(73) Proprietor: Imation Corp., Oakdale, MN 55128 (US)
(72) Inventor: Law, Kam W., c/o MINNESOTA MINING AND, Saint Paul, Minnesota 55133-3427 (US); Guerra, Miguel A., c/o MINNESOTA MINING AND, Saint Paul, Minnesota 55133-3427 (US); Hable, Mary R., c/o MINNESOTA MINING AND, Saint Paul, Minnesota 55133-3427 (US)
(74) Representative: Hilleringmann, Jochen, Dipl.-Ing.

(56) References cited:
- EP-A- 0 211 237
- EP-A- 0 373 884
- EP-A- 0 426 440
- GB-A- 2 114 953
- PATENT ABSTRACTS OF JAPAN vol. 13 no. 204 (M-825) ,15 May 1989 & JP-A-01 026021 (NIPPON SEIKO KK) 27 January 1989,
- PATENT ABSTRACTS OF JAPAN vol. 14 no. 415 (P-1102) ,7 September 1990 & JP-A-02 158977 (SONY CORP) 19 June 1990,
- PATENT ABSTRACTS OF JAPAN vol. 7 no. 278 (P-242) [1423] ,10 December 1983 & JP-A-58 155566 (MATSUSHITA DENKI SANGYO K.K.) 16 September 1983,

## Description

### FIELD OF THE INVENTION

This invention is in the field of belt-driven magnetic recording tape cartridges such as are described in U.S.-A-3,692,255 (Von Behren). More specifically, this invention relates to an improved corner roller lubricant for such belt-driven magnetic recording tape cartridges.

### BACKGROUND OF THE INVENTION

The belt-driven tape cartridges of the Von Behren patent, U.S.-A-3,692,255, are commonly referred to as "data cartridges." A data cartridge typically includes a housing defining a thin, generally rectangular enclosure. The housing contains a length of magnetic recording tape which is wound upon a pair of tape reels. The magnetic recording tape is driven by an elastomeric drive belt which, in turn, is driven by a single, reversible drive motor. The drive belt provides rapid acceleration and deceleration of the recording tape in either direction. The drive belt is stretched along a drive belt path generally defined by a drive roller, a pair of corner rollers, and part of the tape pack wound on each reel.

Data cartridges must meet minimum tape tension specifications while simultaneously operating within maximum allowable drive force specifications. The tape tension must not fall below a certain level as the tape passes from spool to spool or else contact between a read/write head and the tape will be insufficient to allow successful data transfer. The minimum tape tension should thus be as high as possible but, conversely, the maximum drive force, i.e., the force applied to rotate the cartridge drive roller, should be as low as possible so as to allow the use of an inexpensive, low-power motor in the associated drive. As these parameters are dependent on friction within the cartridge, all friction sources must be controlled.

For example, a corner roller, which is rotatably mounted on a corner roller shaft, is one source of friction that must be controlled. The friction between a corner roller and its shaft is referred to herein as the "corner roller drag force" or "drag force."

To achieve the desired tape tension characteristics, it is desirable to maintain a stable, non-zero corner roller drag force. Indeed, the quality of recording and playing back information depends, in part, upon maintaining stable corner roller drag force over time. According to one approach, the desired level of drag force has been provided by applying a lubricant between a corner roller and its shaft. Such lubricants may suffer from a change in viscosity over the life of the cartridge causing the drag roller force to vary considerably. Any variability of such drag force can adversely affect recording and playback performance. Lubricants may also tend to migrate away from the corner roller/shaft interface, a problem which not only causes drag roller force to increase dramatically, but also contaminates other components of the data cartridge. Lubricants may also tend to undergo phase separation, causing the lubricant to lose a portion or all of its lubricating properties.

The EP-A-0 373 884 A3 describes a tape cartridge according to the preamble of claim 1.

The Patent Abstracts of Japan, Vol. 13, No. 204 (M-825) May 15, 1989, corresponding to JP-A-01 026 021, describes lubricating a bearing with a blend of fluorine containing oil and molybdenum disulfide.

The EP-A-0 426 440 describes the use of functional perfluoropolyether lubricants to lubricate the interface between a magnetic head and the corresponding recording disk.

The EP-A-0 211 237 describes the use of functional perfluoropolyether lubricants to lubricate the componentry of audio and video cassettes.

### SUMMARY OF THE INVENTION

We have now discovered an improved roller system that provides extremely stable drag force characteristics over time. The inventive roller system uses a lubricant that not only resists phase separation, but also "grabs" the surface of a corner roller shaft. Advantageously, this ability to "grab" the shaft reduces the tendency of the lubricant to migrate away from the roller/shaft interface.

The advantages of the present invention are achieved by a belt-driven tape cartridge of the type having a roller mounted on a metallic shaft, wherein the belt corner roller has a central bore adapted to receive the shaft. A lubricant is provided between the shaft and the roller. The lubricant comprises a perfluoropolyether having at least one pendant functional moiety capable of bonding to the surface of the shaft wherein said functional moiety is a nonacidic polar group. According to the present invention, "bonding" means that the moiety is capable of chemical bonding or hydrogen bonding with the shaft surface.

### BRIEF DESCRIPTION OF THE DRAWINGS

Fig. 1 is a broken-away top view of a tape cartridge inserted in a data cartridge drive.

Fig. 2 is a perspective view of a portion of the inside of a data cartridge showing a corner roller mounted on a corner roller shaft.

Fig. 3 is a cross-sectional view of the corner roller mounted on a corner roller shaft of Fig. 2 taken along line 3-3.

### DESCRIPTION OF THE PREFERRED EMBODIMENTS

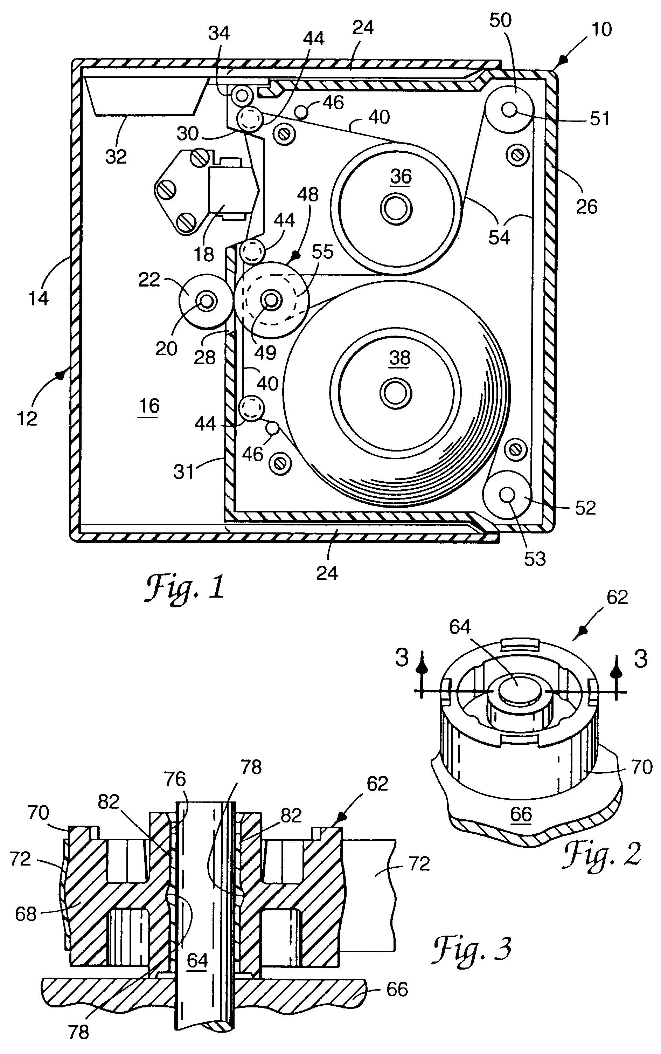

Referring now to FIG. 1, there is shown one example of a belt-driven tape cartridge **10** according to the present invention. The cartridge **10** is shown engaged with a magnetic recording apparatus **12**. As used herein, "magnetic recording apparatus" means an apparatus for recording or reproducing information that is stored on magnetic or optical recording tape. The magnetic recording apparatus **12** comprises a support frame **14** including a horizontal cartridge support deck **16** supporting a magnetic transducer head **18**. The support deck **16** also supports, in a depending manner, a reversible drive motor (not shown), the shaft **20** of which extends through the support deck **16**. A drive puck **22** is mounted on the shaft **20** above the support deck **16**. Elongate guides **24** define the position of the cartridge **10** on the support deck **16**.

The cartridge **10** includes a housing **26** which includes drive access means. In FIG. 1, drive access means comprises openings **28** and **30** which are located on one edgewall **31** of the housing **26**. The opening **28** provides access for the drive puck **22**. The opening **30** provides access for the transducer head **18**. The opening **30** is covered by a door **32** which is biased by a torsion spring **34** towards a closed position covering the opening **30**.

A pair of tape reel hubs **36** and **38** are rotatably mounted in the housing **26** on parallel axes. A length of magnetic recording tape **40** is wound on the hubs **36** and **38** such that a portion of the tape **40** extends from one hub to the other hub. Means for defining a tape path in the housing to guide the tape **40** from one hub to the other hub and across the opening **30** includes guide pins **44** and **46**. Means for defining a drive belt path includes a drive belt roller **48** mounted on a shaft **49**, part of the tape **40** wound on each hub **36** or **38**, and belt corner rollers **50** and **52** mounted on shafts **51** and **53**, respectively. The drive belt **54** of the present invention extends along the drive belt path such that the drive belt **54** frictionally engages a portion of the magnetic recording tape **40** to cause transport of the tape **40** from one hub to the other hub. The length of the unstretched drive belt **54** is less than the length of the drive belt path so that the belt **54** is stretched when inserted into the cartridge **10**.

When the cartridge **10** is engaged with the magnetic recording apparatus **12** as shown in FIG. 1, the drive puck **22** contacts the belt drive roller **48** through the opening **28**, and the transducer head **18** contacts the tape **40** through the opening **30**. A belt-contacting portion **55** of the drive belt roller **48** is recessed to permit the tape **40** to pass across the drive belt roller **48** without touching the drive puck **22**. Cartridges such as cartridge **10** and their operation have been described in U.S.-A-3,692,255 and 4,581,189.

Figs. 2 and 3 show a portion of the inside of a data cartridge which includes a corner roller suitable in the practice of the present invention. A corner roller **62** is rotatably mounted on a shaft **64**. The shaft **64** is mounted in a baseplate **66** such that the corner roller **62** rotates on an axis which is perpendicular to the baseplate **66**. The corner roller **62** includes a body **68** which has an external periphery **70** for guiding a drive belt **72** (not shown in Fig. 2). The corner roller **62** also has a central bore defined by an inner periphery **76**. The central bore is adapted to receive the shaft **64**. Generally, configuring the central bore with a diameter approximately 1.1 mils (0.028 mm) greater than the diameter of the shaft **64** has been found to be suitable in the practice of the present invention. For purposes of clarity, the space between the shaft **64** and the inner periphery **76** has been exaggerated in Fig. 3. We have also found that it is desirable for the inner periphery **76** to have a surface roughness (Ra) of **22** microinches (0.56 µm) to **38** microinches (0.96 µm), preferably about **28** microinches (0.71 µm). In the practice of the present invention, surface roughness (Ra) is measured using a Taylor-Hobson Talysurf **10** apparatus.

As seen best in Fig. 3, the extemal periphery **70** is configured with a slight crown to help prevent the drive belt **72** from shifting away from a centered position on the external periphery **70** as the drive belt **72** is guided by the corner roller **62**. See, e.g., von Behren et al., Adv. Info. Storage Syst., "Mechanical Design of a Belt-Driven Data Cartridge," Vol. 1, pp. 49-59 (1991). Fig. 3 also shows that the shaft **64** extends slightly above the top of the central bore. Fig. 3 also shows a slight sink **78**, i.e., concavity, on the inner periphery **76**. When the corner roller **62** is formed from a polymeric material, the sink **78** forms naturally as the corner roller cools after being released from its mold, because the walls of body **68** of the corner roller **62** are thicker around its center than at its ends. Advantageously, the sink forms a chamber for holding the lubricant **82**.

The metal shaft is formed from a metal. A preferred metal material is hardened steel (SAE 52100 R_{c} 60-64). The corner roller **62** can also be made from a wide variety of materials, but is preferably formed from a thermoplastic or thermosetting resin such as polytetrafluoroethylene, high density polyethylene, polyamide, polyurethane, polyacetal resin, or a carbon-fiber reinforced polyacetal resin.

In order to reduce the variability of corner roller drag force experienced by the drive belt as the drive belt is guided by the corner roller **62**, the lubricant **82** according to the present invention is provided on the interface between the corner roller **62** and the shaft **64**. In the practice of the present invention, the lubricant comprises a perfluoropolyether having at least one pendant functional moiety capable of bonding to the surface of the shaft. More preferably, the perfluoropolyether of the present invention comprises at least two functional moieties capable of bonding to surface of the shaft.

For purposes of the present invention, "nonacidic polar groups" includes salts of acidic polar moieties, e.g., -SO₃Na, but excludes the acidic polar moieties themselves, e.g., -SO₃H. Examples ofnonacidic polar groups suitable in the practice ofthe present invention include hydroxy, nitrile, carboxylate, amine, sulfate, sulfonate, piperonyl, amide, imide, ester, phosphate, phosphonate, quaternary ammonium, pyridine, phosphene, isocyanate, allyl ether, (meth)acrylate, thiol, epoxide, benzotriazole, combinations of such groups, and the like. Particularly preferred nonacidic polar groups include -OH; piperonyl; and esters of the formula 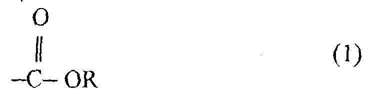 wherein R is an alkyl group having 1 to 8 carbon atoms and is most preferably -CH₃. Although salts of acidic polar groups are suitable in the practice of the present invention, acidic polar groups are undesirable because such groups can degrade the components of data cartridge over time. As used herein, "(meth)acrylate" includes methacrylate and acrylate.

Preferably, the number average molecular weight of the perfluoropolyether lubricant of the present invention is such that the perfluoropolyether lubricant has a viscosity sufficient to provide a desired level of drag force as the corner roller rotates about its shaft. Typical viscosity values range from 0.01 Pa-s to about 1 Pa-s, preferably 0. Pa-s to 0.5 Pa-s, at 22°C. Generally, using perfluoropolyether lubricants with a number average molecular weight in the range from about 500 to 10,000, preferably 1000 to 5000, and more preferably about 2500, has been found to be suitable in the practice of the present invention.

In preferred embodiments of the present invention, the perfluoropolyether has the formula

W-Q-R_{f}-O-(CₓF₂ₓO)ₘ(C_{y}F_{2y}O)ₙ(C_{z}F_{2z}O)ₚ-R_{f}-Q-W (2)

wherein the oxyperfluoroalkylene groups -(CₓF₂ₓO)-, -(C_{y}F_{2y}O)-, and -(C_{z}F_{2z}O)- are either randomly distributed or grouped in blocks in the chain, x is an integer from 1 to 10, y is an integer from 1 to 10, z is an integer from 1 to 10, m is an integer from 1 to 100, n is an integer from 0 to 100, p is an integer from 0 to 100, each R_{f} is independently a divalent perfluoroalkyl group having from 1 to 20 carbon atoms, each Q is independently a single bond or a divalent linking group, and each W independently comprises at least one nonacidic polar functional group.

In other preferred embodiments of the present invention, the perfluoropolyether has the formula

W-Q-R_{f}-O-(CₓF₂ₓO)ₘ(C_{y}F_{2y}O)ₙ(C_{z}F_{2z}O)ₚ-R_{f}' (2a)

wherein the oxyperfluoroalkylene groups -(CₓF₂ₓO)-, -(C_{y}F_{2y}O)-, and -(C_{z}F_{2z}O)- are either randomly distributed or grouped in blocks in the chain, x is an integer from 1 to 10, y is an integer from 1 to 10, z is an integer from 1 to 10, m is an integer from 1 to 100, n is an integer from 0 to 100, p is an integer from 0 to 100, R_{f} is a divalent perfluoroalkyl group having from 1 to 20 carbon atoms, R_{f}' is a monovalent perfluoroalkyl group having from 1 to 20 carbon atoms, Q is a single bond or a divalent linking group, and W comprises at least one nonacidic polar functional group.

Perfluoropolyethers according to formulae (2) and (2a) and processes for making such materials have been described in Italian -A-817,804; U.S.-A-5,093,432; 4,094,911; and 3,810,874; and WO-A-9006296.

Specific examples of particularly preferred perfluoropolyethers according to formula (2) and (2a) include 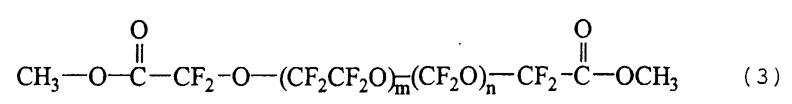 wherein m and n are integers, each having an independent value such that the lubricant has a number average molecular weight in the range from 1000 to 5000 (An example of a compound believed to have a structure according to formula (3) is commercially available as Fomblin Z-DEAL from Ausimont S.p.A. 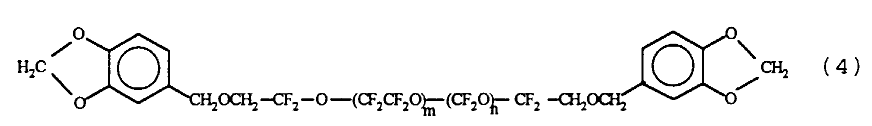 wherein m and n are integers, each having an independent value such that the lubricant has a number average molecular weight in the range from 1000 to 5000 (An example of a compound believed to have a structure according to formula (4) is commercially available as Fomblin AM 2001 from Ausimont S.p.A.);

HOCH₂―CF₂-O―(CF₂CF₂O)ₘ―(CF₂O)ₙ-CF₂-CH₂OH (5)

wherein m and n are integers, each having an independent value such that the lubricant has a number average molecular weight in the range from 1000 to 5000 (An example of a compound believed to have a structure according to formula (5) is commercially available as Fomblin Z-DOL from Ausimont S.p.A.); 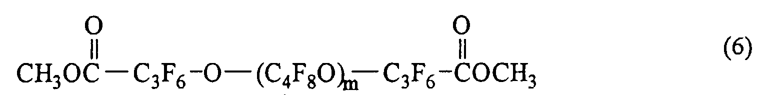 wherein m is an integer having a value such that the lubricant has a number average molecular weight in the range from 1000 to 5000; 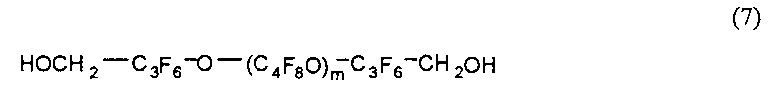 wherein m is an integer having a value such that the lubricant has a number average molecular weight in the range from 1000 to 5000. (Methods of making compounds according to formulae (6) and (7) have been described in U.S.-A-No. 5,039,432; 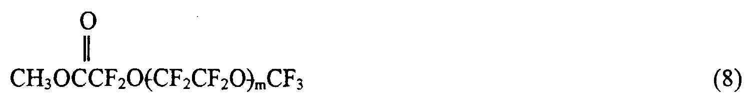 where m is an integer having a value such that the lubricant has a number average molecular weight in the range from 1000 to 5000;

HOCH₂CF₂O(̵CF₂CF₂O)̵ₘCF₃ (9)

where m is an integer having a value such that the lubricant has a number average molecular weight in the range from 1000 to 5000; 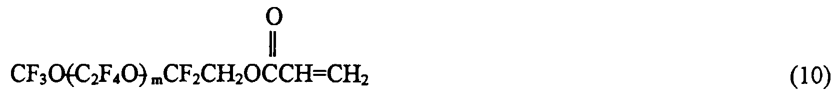 where m is an integer having a value such that the lubricant has a number average molecular weight in the range from 1000 to 5000 (Methods of making compounds according to formulae (8), (9), and (10) have been described in U.S.-A- No. 5,039,432); 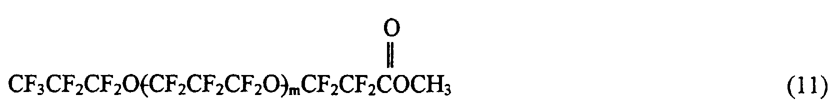 where m is an integer having a value such that the lubricant has a number average molecular weight in the range from 1000 to 5000 (An example of a compound believed to have a structure according to formula (10) is commercially available as Demnum ester from Daikin Industries, Ltd.); and

CF₃CF₂CF₂O(̵CF₂CF₂CF₂O)̵ₘCF₂CF₂CH₂OH (12)

where m is an integer having a value such that the lubricant has a number average molecular weight in the range from 1000 to 5000 (An example of a compound believed to have a structure according to formula (10) is commercially available as Demnum alcohol from Daikin Industries, Ltd.).

The lubricant of the present invention can be applied between the corner roller and the shaft in a variety of ways. For example, the lubricant can be first applied to the shaft after which the corner roller is mounted on the lubed shaft. Alternatively, the lubricant can be applied to the inner periphery of the corner roller first after which the corner roller is then mounted on the shaft. As an alternative, the lubricant can be applied to both the shaft and the corner roller, after which the corner roller is mounted on the shaft.

The amount of lubricant applied between the corner roller and the shaft can be varied depending upon the viscosity of the lubricant and the desired level of drag force. However, if too little lubricant is used, the drag force may become too high or be unstable. If too much lubricant is used, the excess lubricant can migrate out from between the corner roller and the shaft. Generally using an amount of lubricant sufficient to occupy 60 percent to 100 percent, more preferably about 70 percent, of the volume of the central bore remaining after the corner roller is mounted on its shaft has been found to be suitable in the practice of the present invention.

The lubricant of the present invention can be applied as 100% solids, but is more preferably applied as a 5% to 10% solids solution of the lubricant in a suitable solvent. Examples of suitable solvents include chlorinated or fluorinated solvents such as Fluorinert FC 72 brand perfluorohexane, which is commercially available from Minnesota Mining and Manufacturing Company.

Advantageously, after applying the lubricant or lubricant solution of the present invention onto the surface of one of the inner periphery **76** of the corner roller **62** or the shaft **64**, the corner roller can be mounted onto the shaft **64** without applying any additional lubricant onto the other surface. Further, after one of the surfaces is lubed, the corner roller **62** can be immediately mounted onto the shaft **64** without waiting for the lubricant or lubricant solution to dry. For example, our tests have shown that corner rollers mounted onto a shaft 0 minutes, 30 minutes, 2 hours, and 3 hours after applying lubricant all showed substantially the same drag force performance. Heating a lubed corner roller and/or lubed shaft to cause the lubricant to dry is also unnecessary before mounting the corner roller onto a shaft. Heating may even be detrimental. Indeed, our tests have shown that heating a lubed shaft at 140°C for more than one hour reduces the drag force performance of the lubricant. We have also found that applying more than one coating of the lubricant is unnecessary, because applying one lubricant coating achieved substantially the same drag force performance as two coatings of the lubricant. Lubricants of the present invention provide extremely stable, long-lasting drag force characteristics.

The present invention will now be further described with reference to the following examples.

### Example 1

A hardened steel corner roller shaft on a baseplate was cleaned by washing with isopropanol, drying with tissue paper, washing with isopropanol, and blowing dry with an air gun. Then a 10% solids solution of Fomblin AM2001 perfluoropolyether in Fluorinert FC72 perfluorohexane was applied to the corner roller shaft to form a coating. The coated shaft was then heated at 140°C for 2 hours. After the heat-treatment, a corner roller was mounted on the coated shaft. The set-up was then tested on a drag force tester. The same test was repeated three more times using a perfluoropolyether diimide, a perfluoropolyether diamine, and a perfluoropolyether dicarboxylic acid, respectively, in place of the Fomblin AM2001 perfluoropolyether. An assembly having no lubricant coating on the shaft was also tested. The lubed pins all showed more stable drag force than the uncoated pin. In particular, the mean drag force level for the shaft coated with Fomblin AM2001 perfluoropolyether was 0.83 oz. with a standard deviation of 0.03 oz. over 3000 passes.

### Example 2

A hardened steel corner roller shaft on a baseplate was cleaned by washing with isopropanol, drying with tissue paper, washing with isopropanol, and blowing dry with an air gun. Then a 10% solids solution of Fomblin AM2001 perfluoropolyether in Fluorinert FC 72 perfluorohexane was applied to the corner roller shaft to form a coating. After the coating dried, a corner roller was mounted on the coated shaft. The set-up was then tested on a drag force tester. The mean drag force level was 0.86 oz. with a standard deviation of 0.05 oz. over 8200 passes.

### Example 3

A hardened steel corner roller shaft on a baseplate was cleaned by washing with isopropanol, drying with tissue paper, washing with isopropanol, and blowing dry with an air gun. A 100% solids solution of Fomblin Z-DEAL perfluoropolyether having pendant methyl ester groups was applied to the corner roller shaft to form a coating. After the coating was formed, a corner roller was mounted on the coated shaft. The set-up was then tested for 10,000 passes on a drag force tester. The mean drag force was 0.5 oz. with a standard deviation of only 0.05 oz.

### Example 4

A hardened steel corner roller shaft on a baseplate was cleaned by washing with isopropanol, drying with tissue paper, washing with isopropanol, and blowing dry with an air gun. A 100% solids solution of Fomblin Z-DOL perfluoropolyether having pendant hydroxyl groups was applied to the corner roller shaft to form a coating. After the coating was formed, a corner roller was mounted on the coated shaft. The set-up-was then tested for 7000 passes on a drag force tester. The mean drag force was 1.06 oz. with a standard deviation of only 0.05 oz.

### Example 5

A hardened steel corner roller shaft on a baseplate was cleaned by washing with isopropanol, drying with tissue paper, washing with isopropanol, and blowing dry with an air gun. A 100% solids solution of a perfluoropolytetramethylene oxide diol of the formula

HO-CH₂C₃F₆O-(C₄F₈O)ₘC₃F₆CH₂OH

and having a number average molecular weight of about 2460 was applied to the corner roller shaft to form a coating. This diol was made from the corresponding dimethylester as described in U.S.-A-5,093,432 by reduction of the ester groups. After the coating was formed, a corner roller was mounted on the coated shaft. The set-up was then tested for 5000 passes on a drag force tester. The mean drag force was 2.0 oz. with a standard deviation of 0.5 oz.

### Example 6

A hardened steel corner roller shaft on a baseplate was cleaned by washing with isopropanol, drying with tissue paper, washing with isopropanol, and blowing dry with an air gun. A 100% solids solution of perfluoropolytetramethylene oxide dimethylester of the formula CH₃OC(O)C₃F₆O(C₄F₈O)ₙC₃F₆C(O)OCH₃ and having with a molecular weight of 1600 was applied to the corner roller shaft to form a coating. After the coating was formed, a corner roller was mounted on the coated shaft. The set-up was then tested for 10,000 passes on a drag force tester. The test was repeated with a perfluoropolyethylene oxide dimethylester of the formula CH₃OC(O)CF₂O(C₂F₄O)ₙCF₂C(O)OCH₃ and having a molecular weight of 2140, and then again with a perfluoropolytetramethylene oxide dimethyl ester of the formula CH₃OC(O)C₃F₆O(C₄F₈O)ₙC₃F₆C(O)OCH₃ and having a molecular weight of 2450. The mean drag forces of the perfluoropolytetramethylene oxide dimethyl esters having molecular weights of 1600 and 2450 were 1.10 oz. and 1.20 oz., respectively, with a standard deviation of only 0.07 oz. and 0.05 oz., respectively, over 10,000 passes, while the mean drag force level of the perfluoropolyethylene oxide dimethyl ester was 1.60 oz. with a standard deviation of 0.40 oz. over 10,000 passes. All three perfluoropolyether compounds were made as described in U.S.-A-5,093,432.

### Example 7

A hardened steel corner roller shaft on a baseplate was cleaned by washing with isopropanol, drying with tissue paper, washing with isopropanol, and blowing dry with an air gun. A perfluoropolyether having a pendant acrylate group, a molecular weight of 835, and having the formula 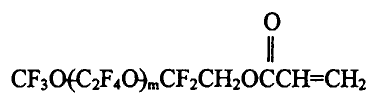 was applied to the corner roller shaft to form a coating. After the coating was formed, the corner roller was mounted on the coated shaft. This setup was then tested for about 8000 passes on a drag force tester. The coating provided a mean drag force level of 0.804 oz. having a standard deviation of 0.035 oz.

### Example 8

The procedure of Example 7 was repeated except the following perfluoropolyether having a pendant hydroxyl group and a molecular weight of 1265 was used: CF₃O(̵C₂F₄O)̵ₘCF₂CH₂OH.

The coating provided a mean drag force level of 0.987 oz. with a standard deviation of 0.064 oz.

### Example 9

The procedure of Example 7 was repeated except the following perfluoropolyether having a pendant methylester group and a molecular weight of 815 was used: CF₃O(̵C₂F₄O)̵ₘCF₂C(O)OCH₃.

The coating provided a mean drag force level of 0.996 oz. with a standard deviation of only 0.479 oz.

Other embodiments of this invention will be apparent to those skilled in the art upon consideration of this specification or from practice of the invention disclosed herein. Various omissions, modifications, and changes to the principles described herein may be made by one skilled in the art without departing from the scope of the invention which is indicated by the following claims.

## Claims

1. A belt-driven tape cartridge (10) of the type having a belt corner roller (50,52) mounted on a shaft (51,53; 64), wherein the belt corner roller (50,52) has a central bore adapted to receive the shaft (51,53; 64), and wherein a lubricant (82) is provided between the shaft (51,53; 64) and the roller (50,52), characterized in that the shaft (51,53; 64) is a metallic shaft and said lubricant (82) comprises a perfluoropolyether having at least one pendant functional moiety capable of bonding to the surface of the shaft and wherein said functional moiety is a nonacidic polar group.

2. The belt-driven tape cartridge (10) according to claim 1, characterized in that the nonacidic polar functional group is selected from the group consisting of hydroxy, nitrile, carboxylate, amine, sulfate, sulfonate, piperonyl, amide, imide, ester, phosphate, phosphonate, quaternary ammonium salt, pyridene, phosphene, isocyanate, (meth)acrylate, allyl ether, thiol, epoxide, and benzotriazole.

3. The belt-driven tape cartridge (10) according to any one of claims 1 or 2, characterized in that the perfluoropolyether has the formula
W-Q-R_{f}-O-(CₓF₂ₓO)ₘ(C_{y}F_{2y}O)ₙ(C_{z}F_{2z}O)ₚ-R_{f}-Q-W
wherein the oxyperfluoroalkylene groups -(CₓF₂ₓO)-, -(C_{y}F_{2y}O)-, and -(C_{z}F_{2z}O)- are either randomly distributed or grouped in blocks in the chain, x is an integer from 1 to 10, y is an integer from 1 to 10, z is an integer from 1 to 10, m is an integer from 1 to 100, n is an integer from 0 to 100, p is an integer from 0 to 100, each R_{f} is independently a divalent perfluoroalkyl group having from 1 to 20 carbon atoms, each Q is independently a single bond or a divalent linking group, and each W independently comprises at least one nonacidic polar functional group.

4. The belt-driven tape cartridge (10) according to any one of claims 1 or 3, characterized in that the perfluoropolyether has the formula
W-Q-R_{f}-O-(CₓF₂ₓO)ₘ(C_{y}F_{2y}O)ₙ(C_{z}F_{2z}O)ₚ-R_{f}'
wherein the oxyperfluoroalkylene groups -(CₓF₂ₓO)-, -(C_{y}F_{2y}O)-, and -(C_{z}F_{2z}O)- are either randomly distributed or grouped in blocks in the chain, x is an integer from 1 to 10, y is an integer from 1 to 10, z is an integer from 1 to 10, m is an integer from 1 to 100, n is an integer from 0 to 100, p is an integer from 0 to 100, R_{f} is a divalent perfluoroalkyl group having from 1 to 20 carbon atoms, Rf' is a monovalent perfluoroalkyl group having from 1 to 20 carbon atoms; Q is a single bond or a divalent linking group, and W comprises at least one nonacidic polar functional group.

5. The belt-driven tape cartridge (10) according to claim 3 or 4, characterized in that Q is -C(O)- and W is -OR wherein R is an alkyl group having 1 to 8 carbon atoms.

6. The belt-driven tape cartridge (10) according to any one of claims 3 to 5, characterized in that W comprises piperonyl.

7. The belt-driven tape cartridge (10) according to any one of claims 3 to 6, characterized in that W comprises a hydroxyl moiety.

## Patentansprüche

1. Riemengetriebene Bandcassette (10) des Typs, der eine Riemeneckrolle (50, 52) aufweist, die auf einer Welle (51, 53; 64) montiert ist, wobei die Riemeneckrolle (50, 52) eine zentrale Bohrung aufweist, die so angepaßt ist, daß sie die Welle (51, 53; 64) aufnehmen kann, und wobei ein Gleitmittel (82) zwischen der Welle (51, 53; 64) und der Rolle (50, 52) bereitgestellt wird, dadurch gekennzeichnet, daß die Welle (51, 53; 64) eine Metallwelle ist und das Gleitmittel (82) einen Perfluorpolyether umfaßt, der wenigstens eine seitenständige funktionelle Struktureinheit aufweist, die an die Oberfläche der Welle zu binden vermag, und wobei die funktionelle Struktureinheit eine nichtsaure polare Gruppe ist.

2. Riemengetriebene Bandcassette (10) gemäß Anspruch 1, dadurch gekennzeichnet, daß die nichtsaure polare funktionelle Gruppe aus der Gruppe ausgewählt ist, die aus Hydroxy, Nitril, Carboxylat, Amin, Sulfat, Sulfonat, Piperonyl, Amid, Imid, Ester, Phosphat, Phosphonat, quartärem Ammoniumsalz, Pyridin, Phosphen, Isocyanat, (Meth)acrylat, Allylether, Thiol, Epoxid und Benzotriazol besteht.

3. Riemengetriebene Bandcassette (10) gemäß einem der Ansprüche 1 oder 2, dadurch gekennzeichnet, daß der Perfluorpolyether die Formel
W-Q-R_{f}-O-(CₓF₂ₓO)ₘ(C_{y}F_{2y}O)ₙ(C_{z}F_{2z}O)ₚ-R_{f}-Q-W
hat, wobei die Oxyperfluoralkylengruppen -(CₓF₂ₓO)-, -(C_{y}F_{2y}O)- und -(C_{z}F_{2z}O)- in der Kette entweder statistisch verteilt oder zu Blöcken gruppiert sind, x eine ganze Zahl von 1 bis 10 ist, y eine ganze Zahl von 1 bis 10 ist, z eine ganze Zahl von 1 bis 10 ist, m eine ganze Zahl von 1 bis 100 ist, n eine ganze Zahl von 0 bis 100 ist, p eine ganze Zahl von 0 bis 100 ist, jedes R_{f} unabhängig eine zweiwertige Perfluoralkylgruppe mit 1 bis 20 Kohlenstoffatomen ist, jedes Q unabhängig eine Einfachbindung oder eine zweiwertige Verknüpfungsgruppe ist und jedes W unabhängig wenigstens eine nichtsaure polare funktionelle Gruppe umfaßt.

4. Riemengetriebene Bandcassette (10) gemäß einem der Ansprüche 1 oder 3, dadurch gekennzeichnet, daß der Perfluorpolyether die Formel
W-Q-R_{f}-O-(CₓF₂ₓO)ₘ(C_{y}F_{2y}O)ₙ(C_{z}F_{2z}O)ₚ-R_{f}'
hat, wobei die Oxyperfluoralkylengruppen -(CₓF₂ₓO)-, -(C_{y}F_{2y}O)- und -(C_{z}F_{2z}O)- in der Kette entweder statistisch verteilt oder zu Blöcken gruppiert sind, x eine ganze Zahl von 1 bis 10 ist, y eine ganze Zahl von 1 bis 10 ist, z eine ganze Zahl von 1 bis 10 ist, m eine ganze Zahl von 1 bis 100 ist, n eine ganze Zahl von 0 bis 100 ist, p eine ganze Zahl von 0 bis 100 ist, R_{f} eine zweiwertige Perfluoralkylgruppe mit 1 bis 20 Kohlenstoffatomen ist, R_{f}' eine einwertige Perfluoralkylgruppe mit 1 bis 20 Kohlenstoffatomen ist, Q eine Einfachbindung oder eine zweiwertige Verknüpfungsgruppe ist und W wenigstens eine nichtsaure polare funktionelle Gruppe umfaßt.

5. Riemengetriebene Bandcassette (10) gemäß Anspruch 3 oder 4, dadurch gekennzeichnet, daß Q -C(O)- ist und W -OR ist, wobei R eine Alkylgruppe mit 1 bis 8 Kohlenstoffatomen ist.

6. Riemengetriebene Bandcassette (10) gemäß einem der Ansprüche 3 bis 5, dadurch gekennzeichnet, daß W Piperonyl umfaßt.

7. Riemengetriebene Bandcassette (10) gemäß einem der Ansprüche 3 bis 6, dadurch gekennzeichnet, daß W eine Hydroxygruppe umfaßt.

## Revendications

1. Cassette de bande actionnée par courroie (10) du type ayant un rouleau d'angle à courroie (50, 52) monté sur un arbre (51, 53 ; 64), dans laquelle le rouleau d'angle à courroie (50, 52) possède un alésage central adapté pour recevoir l'arbre (51, 53 ; 64), et dans laquelle un lubrifiant (82) est fourni entre l'arbre (51, 53 ; 64) et le rouleau (50, 52), caractérisée en ce que l'arbre (51, 53 ; 64) est un arbre métallique et ledit lubrifiant (82) comprend un perfluoropolyéther ayant au moins un groupement fonctionnel accroché capable de liaison à la surface de l'arbre et dans lequel ledit groupement fonctionnel est un groupe polaire non acide.

2. Cassette de bande actionnée par courroie (10) selon la revendication 1, caractérisée en ce que le groupe fonctionnel polaire non acide est choisi dans le groupe comprenant les groupes hydroxy, nitrile, carboxylate, amine, sulfate, sulfonate, pipéronyle, amide, imide, ester, phosphate, phosphonate, sel d'ammonium quaternaire, pyridène, phosphène, isocyanate, (méth)-acrylate, éther allylique, thiol, époxyde et benzotriazole.

3. Cassette de bande actionnée par courroie (10) selon l'une quelconque des revendications 1 ou 2, caractérisée en ce que le perfluoropolyéther possède la formule :
W-Q-R_{f}-O-(CₓF₂ₓO)ₘ(C_{Y}F_{2Y}O)ₙ(C_{z}F_{2z}O)ₚ-R_{f}-Q-W
dans laquelle les groupes oxyperfluoroalkylène -(CₓF₂ₓO)-, -(C_{Y}F_{2Y}O)-, et -(C_{z}F_{2z}O)- sont soit distribués de manière aléatoire soit groupés en séquence dans la chaîne, x représente un nombre entier valant de 1 à 10, y représente un nombre entier valant de 1 à 10, z représente un nombre entier valant de 1 à 10, m représente un nombre entier valant de 1 à 100, n représente un nombre entier valant de 0 à 100, p représente un nombre entier valant de 0 à 100, chaque R_{f} représente indépendamment un groupe perfluoroalkyle divalent ayant de 1 à 20 atomes de carbone, chaque Q représente indépendamment une liaison simple ou un groupe de liaison divalent, et chaque W comprend indépendamment au moins un groupe fonctionnel polaire non acide.

4. Cassette de bande actionnée par courroie (10) selon l'une quelconque des revendications 1 ou 3, caractérisée en ce que le perfluoropolyéther possède la formule
W-Q-R_{f}-O-(CₓF₂ₓO)ₘ(C_{Y}F_{2Y}O)ₙ(C_{z}F_{2z}O)ₚ-R_{f}.
dans laquelle les groupes oxyperfluoroalkylène -(CₓF₂ₓO)-, -(C_{Y}F_{2Y}o)-, et -(CₓF₂ₓO)- sont soit distribués de manière aléatoire soit groupés en séquence dans la chaîne, x représente un nombre entier valant de 1 à 10, y représente un nombre entier valant de 1 à 10, z représente un nombre entier valant de 1 à 10, m représente un nombre entier valant de 1 à 100, n représente un nombre entier valant de 0 à 100, p représente un nombre entier valant de 0 à 100, R_{f} représente un groupe perfluoroalkyle divalent ayant de 1 à 20 atomes de carbone, R_{f'} représente un groupe perfluoroalkyle monovalent ayant de 1 à 20 atomes de carbone ; Q représente une liaison simple ou un groupe de liaison divalent et W comprend au moins un groupe fonctionnel polaire non acide.

5. Cassette de bande actionnée par courroie (10) selon la revendication 3 ou 4, caractérisée en ce que Q est -C(O)- et W est -OR où R représente un groupe alkyle ayant 1 à 8 atomes de carbone.

6. Cassette de bande actionnée par courroie (10) selon l'une quelconque des revendications 3 à 5, caractérisée en ce que W englobe le groupe pipéronyle.

7. Cassette de bande actionnée par courroie (10) selon l'une quelconque des revendications 3 à 6, caractérisée en ce que W comprend un groupe hydroxyle.
